# FASCICULE DE BREVET EUROPEEN

(11) **EP 3 074 283 B1**
(45) Date de publication et mention de la délivrance du brevet: **06.09.2017**
(21) Numéro de dépôt: 14803144.6
(22) Date de dépôt: 27.11.2014
(51) Int. Cl.: B60T 7/06, G05G 1/34, G05G 1/487

(54) **PEDALE DE FREIN POUR KART BIPLACE ET KART BIPLACE CORRESPONDANT**
BREMSPEDAL FÜR EIN ZWEISITZER-GOKART UND ENTSPRECHENDES ZWEISITZER-GOKART
BRAKE PEDAL FOR A TWO-SEATER GO-KART AND CORRESPONDING TWO-SEATER GO-KART

(30) Priorité: 29.11.2013 FR 1361876
(43) Date de publication de la demande: 05.10.2016
(73) Titulaire: Sodikart, 44220 Couëron (FR)
(72) Inventeur: MERIAN, Alain, F-44450 La Chapelle Basse Mer (FR)
(74) Mandataire: Vidon Brevets & Stratégie
(86) Numéro de dépôt international: PCT/EP2014/075852
(87) Numéro de publication internationale: WO 2015/078988

(56) Documents cités:
- WO-A1-2006/051115
- WO-A1-2012/081951
- WO-A2-03/082622
- DE-A1- 3 444 323
- GB-A- 2 309 287
- GB-A- 2 466 066
- GB-A- 2 467 936
- US-A- 1 302 837
- US-A- 5 497 678

## Description

### 1. Domaine de l'invention

Le domaine de l'invention est celui des véhicules de loisir utilisés par exemple sur pistes, et plus particulièrement celui des karts. De tels véhicules sont connues pour exemple par les documents WO 2012/081951 A1, US 1 302 837 A ou CN 10 362 5446. Les karts sont des véhicules motorisés exploités sur des pistes fermées, par opposition à des véhicules roulant sur route. Ces pistes sont extérieures (« outdoor ») ou couvertes (« indoor »). On peut distinguer deux catégories principales de karts : les karts de location et les karts de loisir-compétition.

Les premiers sont exploités par des professionnels qui les louent à des particuliers (location au ticket), ou à des entreprises dans le cadre de séminaires de motivation du personnel ou autres. Les seconds sont la plupart du temps la propriété de personnes privées, qui les utilisent pour leur loisir, en s'entraînant et en participant à des compétitions.

Parmi ces différents types de karts, on distingue les karts monoplaces, et les karts biplaces, comprenant un siège passager et un siège pilote, qui peuvent être utilisés pour proposer une découverte ou un baptême de kart : un passager novice s'installe ainsi aux côtés d'un pilote expérimenté pour s'initier à cette activité. Au-delà de cette phase de découverte, le kart biplace peut également être utilisé au cours d'une phase d'apprentissage, au cours de laquelle un élève-pilote s'initie à la conduite de kart, aux côtés d'un pilote instructeur.

L'invention s'applique plus particulièrement, mais non exclusivement, à de tels karts biplaces, utilisés notamment pour l'apprentissage de la conduite par un élève-pilote.

### 2. Art antérieur et ses inconvénients

Comme pour les véhicules automobiles, la formation à la conduite d'un apprenti pilote est assurée par un pilote instructeur qui prend place aux côtés de l'apprenti pilote et lui enseigne l'art de la conduite. Lors des premières leçons au moins, il est important que le pilote instructeur puisse prendre les commandes du kart, pour rectifier une erreur de trajectoire de l'apprenti pilote, ou opérer un freinage d'urgence visant à éviter un accident.

Pour ce faire, les karts biplaces utilisés pour la formation des pilotes sont généralement équipés d'un système de double pédalier, à savoir un pédalier disposé à la place pilote et un pédalier disposé à la place passager. Ainsi, le pilote instructeur laisse l'apprenti pilote accélérer et freiner au fil du parcours, mais peut, en actionnant son propre pédalier, compenser ou rectifier une erreur d'appréciation ou de freinage.

Cependant, un tel système de double pédalier présente plusieurs inconvénients.

Tout d'abord, il est particulièrement lourd et complexe de mise en oeuvre, et accroît substantiellement le coût du kart biplace.

En outre, de tels karts biplaces, qui sont utilisés pour la formation des pilotes, sont également utilisés pour réaliser des initiations ou des baptêmes de karts, au cours desquels un passager inexpérimenté prend place aux côtés d'un pilote, qui assure seul le pilotage du kart sur la piste. Lorsqu'un kart biplace embarque un système de double pédalier, il existe donc un risque que ce passager inexpérimenté actionne de manière intempestive et inappropriée l'une ou l'autre des pédales de frein ou d'accélérateur et, ce faisant, vienne perturber la conduite du kart, et mette en danger le pilote et son passager.

Par ailleurs, dans la plupart de ces systèmes de double pédalier, les pédaliers sont indépendants l'un de l'autre, de sorte qu'un actionnement de la pédale de frein de l'un des pédaliers n'entraîne pas de mouvement correspondant de la pédale de frein de l'autre pédalier. Ainsi, lorsque le pilote instructeur freine, il peut en informer l'apprenti pilote, qui ressent la décélération du kart, mais qui ne détecte pas directement ce freinage au niveau de la pédale de frein sur laquelle son pied est posé.

Il existe donc un besoin d'une technique permettant de pallier ces différents inconvénients de l'art antérieur.

### 3. Exposé de l'invention

L'invention répond à ce besoin en proposant un kart biplace, comprenant une place passager et une place pilote, et équipé d'un pédalier associé à la place pilote, comprenant une pédale d'accélérateur et une pédale de frein.

Selon l'invention, la pédale de frein présente, ou peut recevoir, une extension amovible, s'étendant sensiblement parallèlement à la pédale de frein vers la place passager, de façon à permettre à une personne présente à la place passager d'agir sur la pédale de frein. Cette extension amovible est montée mobile sur la pédale de frein entre une position intégrée à la pédale de frein et une position déployée par rapport à la pédale de frein.

Ainsi, l'invention repose sur une approche tout à fait nouvelle et inventive du système de freinage d'un kart biplace, destiné notamment à la formation d'apprentis pilotes. En effet, l'invention propose un nouveau type de pédale de frein, équipé ou apte à être équipé d'une extension, sur laquelle le pilote instructeur peut agir pour freiner à la place, ou en sus de l'apprenti pilote.

Il n'est ainsi plus nécessaire de disposer d'un système de double pédalier, ce qui allège le kart biplace, tant en termes de poids que de complexité, et réduit son coût de fabrication. Pour autant, le freinage d'urgence par le pilote instructeur en cas d'erreur de pilotage de l'apprenti pilote reste possible et aisée, l'extension de la pédale de frein étant disposée du côté du pilote instructeur. Une telle extension est de préférence sensiblement située dans le plan de la surface d'appui de la pédale de frein.

En outre, une telle extension étant amovible, il est possible de ne la mettre en place que lorsque le kart biplace est utilisé pour la formation d'un apprenti pilote, et de l'escamoter lorsque le kart biplace est utilisé pour effectuer un baptême de kart : grâce au principe de l'invention, il n'existe donc aucun risque qu'un passager inexpérimenté freine de manière intempestive.

Enfin, l'extension étant liée à la pédale de frein, lorsque le pilote instructeur freine par appui sur cette extension, l'apprenti pilote, dont le pied est posé sur la pédale de frein, en ressent directement l'effet : l'apprentissage de la technique de freinage est donc amélioré, puisque l'apprenti pilote détecte plus aisément l'instant et l'intensité du freinage du pilote instructeur, le long du parcours de la piste.

Selon un premier aspect de l'invention, une telle extension est montée mobile en rotation sur la pédale de frein, entre deux positions sensiblement à 180° l'une de l'autre, une position intégrée à la pédale et une position déployée par rapport à la pédale.

L'axe d'une telle rotation correspond par exemple au côté de la surface d'appui de la pédale de frein situé du côté de la place passager. Ce mouvement de rotation permet de très simplement faire passer l'extension de la position intégrée à la position déployée, et réciproquement, selon que le passager du kart biplace a ou non besoin de pouvoir freiner, en sus du pilote (utilisation en formation à la conduite ou en baptême de kart).

Selon un deuxième aspect de l'invention, une telle extension est montée mobile en translation sur la pédale de frein, entre une position intégrée à la pédale et une position déployée par rapport à la pédale.

Dans ce cas, il suffit de faire coulisser l'extension en dehors d'un logement dans lequel elle est placée en position intégrée, pour la positionner en position déployée. Un tel logement peut être intégré à la surface d'appui de la pédale de frein, ou situé à proximité de cette dernière.

Selon un autre aspect particulier de l'invention, une telle extension porte une portion de revêtement assurant sensiblement une continuité avec la surface de la pédale, dans la position intégrée.

Ainsi, lorsque l'extension amovible est en position intégrée, elle est peu visible, dans la mesure où elle est recouverte d'un revêtement identique ou similaire à celui de la surface d'appui de la pédale de frein. En outre, sa présence, en position intégrée, n'altère donc pas le fonctionnement de la pédale de frein; elle peut notamment être recouverte du même revêtement antidérapant que le reste de la pédale, de sorte que sa présence n'altère pas les sensations du pilote. La portion de revêtement dont elle est recouverte est par ailleurs, de préférence, affleurante avec le reste de la surface d'appui de la pédale de frein, de sorte que la présence de l'extension en position intégrée ne génère ni creux ni protubérance sous les semelles du pilote.

Selon une caractéristique avantageuse, le pédalier est réglable, par translation par rapport au châssis du kart.

Sa position peut ainsi avantageusement être adaptée à la morphologie du pilote ou de l'apprenti pilote, et à la taille de ses jambes, de façon à le placer dans des conditions de conduite optimales.

Selon un autre aspect de l'invention, un tel pédalier comprend des moyens de modification d'une action de la pédale d'accélérateur, lorsque la pédale de frein est actionnée.

En effet, il est fréquent que les apprentis pilotes, ne maîtrisant pas encore parfaitement le jeu des pédales de frein et d'accélérateur, maintiennent par erreur la pédale d'accélérateur enfoncée, même quand ils actionnent la pédale de frein. L'action du freinage s'en trouve ainsi réduite, ce qui peut provoquer des accidents. Selon un aspect secondaire de l'invention, qui pourrait être mis en oeuvre indépendamment de l'extension amovible de la pédale de frein, le pédalier d'un kart biplace selon un mode de réalisation de l'invention permet avantageusement un contrôle de l'accélération au moyen de la pédale de frein. Il comprend ainsi un système généralement connu sous le nom d' « anti gaz frein », dont la conception et la mise en oeuvre sont particulièrement simples, comme exposé ci-après.

De façon avantageuse, de tels moyens de modification détendent un câble d'accélérateur sur lequel agit la pédale d'accélérateur.

Ainsi, lorsque la pédale de frein est actionnée, elle entraîne une détente du câble d'accélérateur, et contre donc un éventuel appui intempestif du pied du pilote sur la pédale d'accélérateur. Ceci accroît donc substantiellement l'intensité du freinage.

Selon un mode de réalisation particulier de l'invention, la pédale d'accélérateur est reliée au câble d'accélérateur par une biellette mobile autour d'un axe de rotation, la pédale de frein déplaçant l'axe de rotation lorsqu'elle est actionnée.

La biellette mobile est reliée, par l'une de ses extrémités, à la pédale d'accélérateur, et par son autre extrémité, au câble d'accélérateur. Ainsi, de façon classique, lorsque le pilote appuie sur la pédale d'accélérateur, cela exerce une pression sur l'extrémité correspondante de la biellette, entraînant donc sa rotation. Il en résulte une traction exercée sur le câble d'accélérateur relié à son autre extrémité, et donc une accélération du kart. Selon l'invention, cette biellette est montée sur un support mobile en translation sous l'effet de l'actionnement de la pédale de frein. Lorsque la pédale de frein est enfoncée, le support, et donc l'axe de rotation de la biellette, se translatent de façon telle que le câble d'accélérateur se détend.

Préférentiellement, un tel pédalier met en oeuvre un unique ressort de rappel agissant sur la biellette, assurant le rappel en position de repos de la pédale d'accélérateur et de la pédale de frein.

Ainsi, lorsque le pilote relâche la pédale de frein et/ou la pédale d'accélérateur, ce ressort de rappel unique agit sur le support de la biellette, qui reprend sa position de repos. Le mécanisme est donc particulièrement simple puisqu'un unique ressort, relié à la biellette, la rappelle en position de repos et, ce faisant, rappelle également les pédales de frein et d'accélérateur en position de repos.

L'invention concerne également une pédale de frein pour kart biplace, comprenant une place passager et une place pilote, et équipé d'un pédalier associé à la place pilote, comprenant une pédale d'accélérateur et une pédale de frein.

Selon l'invention, une telle pédale de frein présente ou peut recevoir une extension amovible, s'étendant sensiblement parallèlement à la pédale de frein vers la place passager, de façon à permettre à une personne présente à la place passager d'agir sur la pédale de frein. Cette extension amovible est montée mobile sur la pédale de frein entre une position intégrée à la pédale de frein et une position déployée par rapport à la pédale de frein.

Une telle pédale de frein peut par ailleurs présenter tout ou partie des caractéristiques, seules ou en combinaison, exposées ci-avant pour la pédale de frein d'un kart biplace selon l'invention.

### 4. Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- la figure 1 illustre un pédalier selon un mode de réalisation de l'invention, comprenant une pédale de frein munie d'une extension amovible, représentée ici en position intégrée;
- la figure 2 présente le pédalier de la figure 1, lorsque l'extension de la pédale de frein est en position déployée;
- les figures 3A à 3D illustrent un système « anti gaz frein » dans un mode de réalisation de l'invention, dans les configurations suivantes :
   ∘ pour la figure 3A, lorsque ni la pédale de frein, ni la pédale d'accélérateur ne sont actionnées ;
   ∘ pour la figure 3B, lorsque la pédale d'accélérateur est actionnée mais que la pédale de frein ne l'est pas ;
   ∘ pour la figure 3C, lorsque la pédale de frein est actionnée mais que la pédale d'accélérateur ne l'est pas ;
   ∘ pour la figure 3D, lorsque les pédales de frein et d'accélérateur sont toutes deux actionnées.

### 5. Description détaillée de modes de réalisation de l'invention

Le principe général de l'invention repose sur une pédale de frein pour kart biplace comprenant une extension amovible, permettant à un utilisateur installé à la place passager du kart, de freiner en complément ou à la place du pilote par actionnement de cette extension.

Selon un aspect secondaire, qui pourrait être mis en oeuvre indépendamment de cette extension amovible de pédale de frein, l'invention propose également un nouveau système simple d' « anti gaz frein ».

On présente désormais, en relation avec les figures, un mode de réalisation de l'invention.

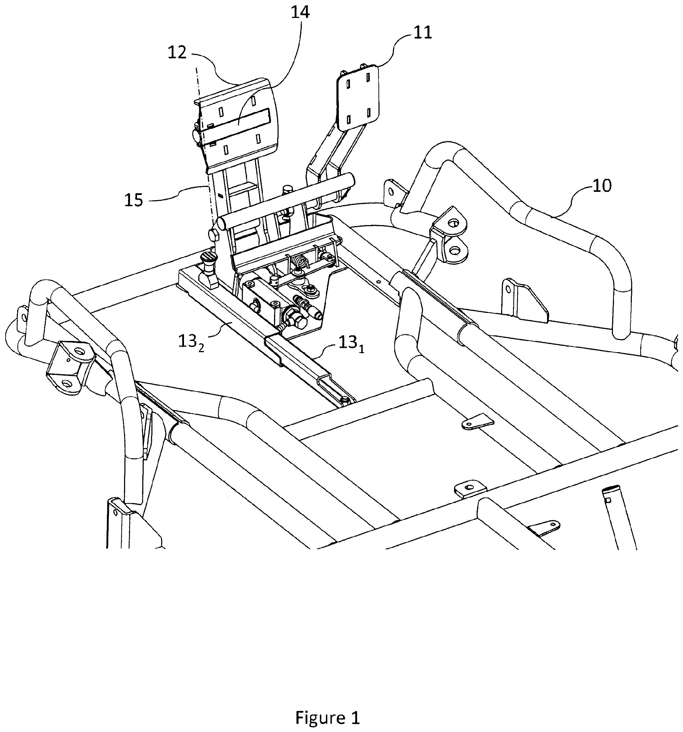

La **figure 1** présente une vue en perspective de la partie avant d'un kart biplace, comprenant un châssis 10 et un pédalier, placé en regard du siège pilote (en l'espèce, sur la partie droite de la figure 1, la partie gauche correspondant à la place passager). On notera que par souci de simplification, seuls le châssis et le pédalier ont été représentés, à l'exception des autres éléments constitutifs du kart (sièges, colonne de direction, roues, etc.)

Un tel pédalier comprend classiquement une pédale d'accélérateur 11 et une pédale de frein 12, respectivement associées à des câbles d'accélérateur et de frein, qui ne sont pas représentés sur la figure 1.

Le pédalier est monté coulissant par rapport au châssis 10, grâce à un mécanisme de tube télescopique comprenant deux éléments référencés 13₁ et 13₂ coulissant l'un dans l'autre. Il est ainsi possible d'ajuster la distance entre le pédalier et le siège du pilote, de façon à l'adapter à la taille des jambes de ce dernier.

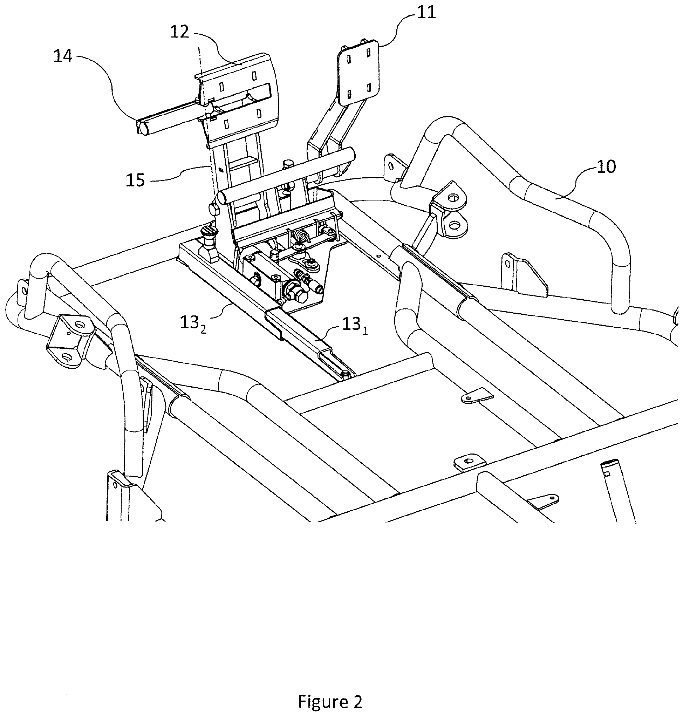

La pédale de frein référencée 12 présente par ailleurs une extension amovible référencée 14, présentée ici en position intégrée à la pédale de frein 12. Cette extension amovible 14 présente un revêtement 16 (voir **figure 2**) similaire ou identique à celui de la surface d'appui de la pédale de frein 12, et est intégrée à cette dernière de façon à ce que la surface de l'extension 14 et la surface d'appui de la pédale de frein 12 soient affleurantes lorsque l'extension 14 est dans cette position intégrée à la pédale de frein 12.

Dans le mode de réalisation présenté ici, cette extension amovible 14 peut pivoter d'environ 180° autour de l'axe de rotation référencé 15, de façon à passer de la position intégrée de la **figure 1** à la position déployée de la **figure 2****.** L'axe de rotation référencé 15 est sensiblement parallèle au bord de la pédale de frein 12, côté passager. L'extension amovible 14 se déploie ainsi en direction du siège passager, dans le plan de la surface d'appui de la pédale de frein 12, de façon à pouvoir être actionnée par un utilisateur installé à la place passager du kart biplace.

Cette extension amovible 14 présente une forme cylindrique, recouverte d'une portion de revêtement 16.

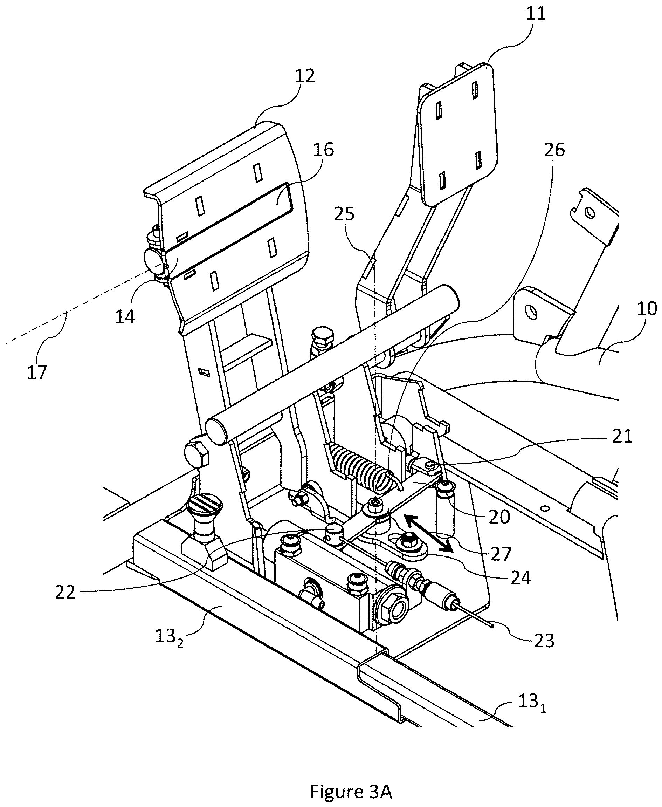

En variante, l'extension amovible 14 peut passer de la position intégrée à la position déployée par translation vers le côté passager du kart, comme illustré en figure 3A. L'axe 17 de cette translation est par exemple confondu avec l'axe de révolution du cylindre formant l'extension 14, lorsque cette dernière à une forme cylindrique. Dans ce cas, la portion de revêtement 16 se situe du côté opposé de l'extension 14 par rapport à la **figure 2****.** En d'autres termes, le pied du passager vient en appui sur la portion de revêtement 16 lorsqu'il actionne la pédale de frein 12, ce qui est particulièrement avantageux lorsque le revêtement utilisé est un revêtement antidérapant.

Dans un autre mode de réalisation, l'extension amovible 14 pourrait ne pas présenter de position intégrée à la pédale de frein, mais consister en un élément additionnel, que l'on ne viendrait fixer à la pédale de frein 12 que lorsqu'on souhaite utiliser le kart biplace pour une formation à la conduite. Dans ce cas, tout moyen approprié de solidarisation de cette extension amovible 14 à la pédale de frein 12 pourrait être envisagé.

On présente désormais, en relation avec les **figures 3A à 3D****,** un autre aspect de l'invention relatif à un système connu sous le nom d' « anti gaz frein ». Un tel système peut être mis en oeuvre dans tout type de kart, qu'il s'agisse d'un kart monoplace ou biplace, d'un kart de loisir ou de compétition. Notamment, il peut être mis en oeuvre dans un kart biplace dont la pédale de frein comprend une extension amovible ; il peut également être utilisé et embarqué dans un kart ne comprenant pas d'extension amovible de la pédale de frein.

Un tel système « anti gaz frein » est particulièrement utile dans les karts pilotés par des conducteurs peu expérimentés, et donc notamment dans les karts biplaces décrits ci-avant ; en effet, de tels apprentis pilotes, maîtrisant mal le jeu des pédales de frein et d'accélérateur, ont tendance à laisser leur pied droit appuyé sur la pédale d'accélérateur quand ils actionnent la pédale de frein de leur pied gauche.

La **figure 3A** illustre un tel système anti gaz frein dans une position de repos, c'est-à-dire lorsqu'aucune des pédales de frein 12 et d'accélérateur 11 n'est actionnée par le pilote.

De manière classique, la pédale d'accélérateur 11 actionne un câble d'accélérateur 23 relié au moteur du kart. On notera que, sur les **figures 3A à 3D****,** seule une portion de ce câble d'accélérateur 23 a été représentée, par souci de simplification. Un tel câble d'accélérateur 23 se prolonge cependant bien sûr jusqu'au moteur.

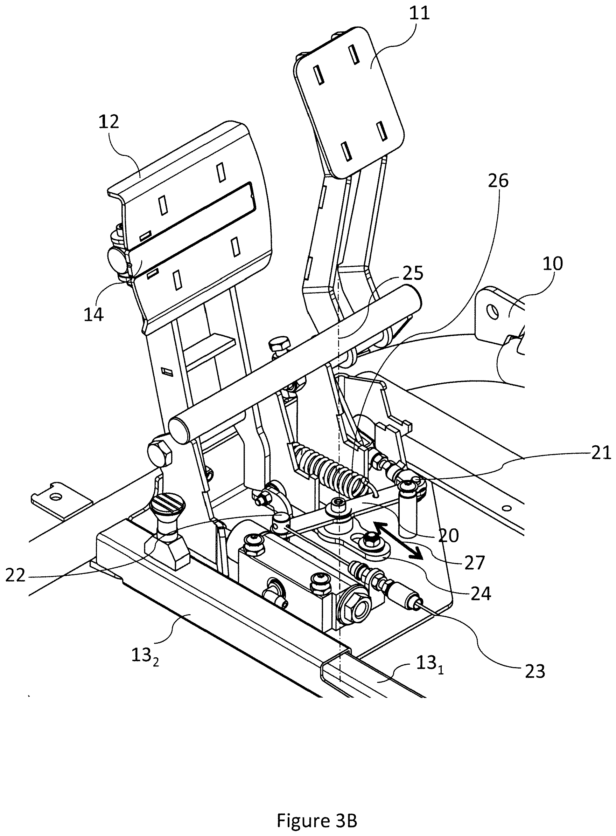

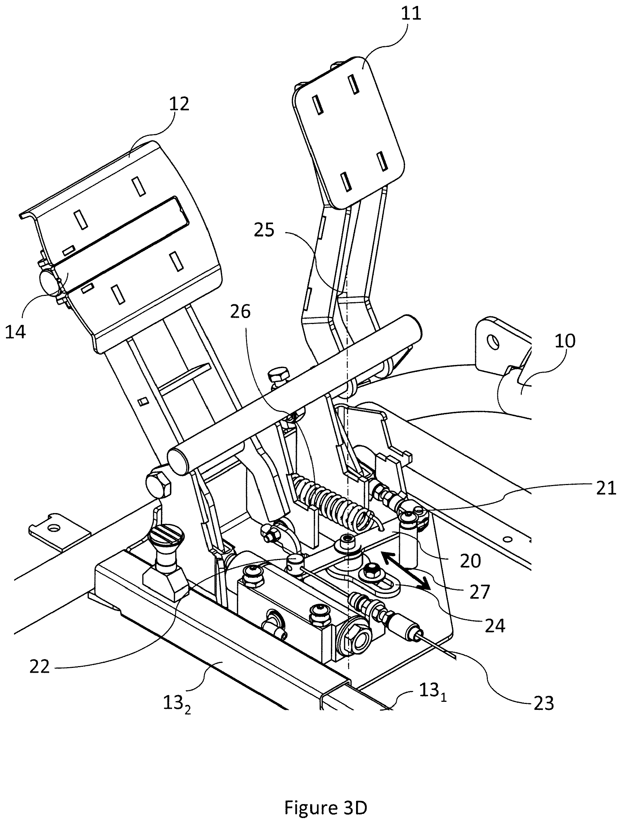

Lorsque le pilote appuie sur la pédale d'accélérateur 11 (voir **figure 3B**, où seule la pédale d'accélérateur est actionnée, et **figure 3D** où les pédales de frein et d'accélérateur sont toutes deux actionnées), le câble d'accélérateur 23 se tend. Un tel câble d'accélérateur 23 est relié à l'extrémité référencée 22 d'une biellette 20. L'autre extrémité référencée 21 de la biellette 20 est connectée à la pédale d'accélérateur 11. La biellette 20 est par ailleurs mobile en rotation autour d'un axe référencé 25, représenté en traits mixtes sur les **figures 3A à 3D****.**

Ainsi, comme illustré en **figure 3B****,** lorsque le pilote appuie sur la pédale d'accélérateur 11, cela entraîne la rotation en sens anti-trigonométrique autour de l'axe référencé 25 de la biellette référencée 20, ce qui a pour effet de tendre le câble d'accélérateur 23.

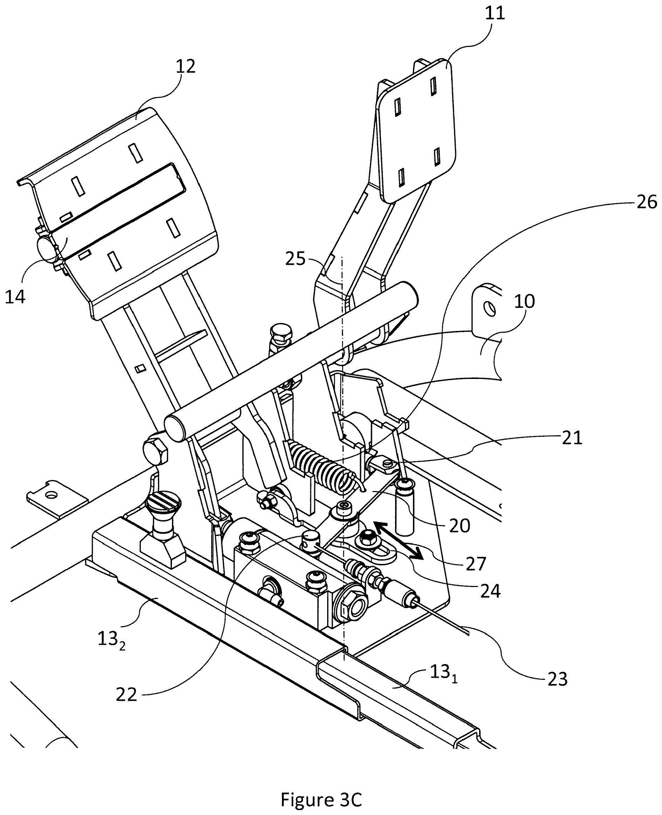

Lorsque le pilote relâche la pédale d'accélérateur 11 (voir **figure 3A****,** sur laquelle les deux pédales de frein 12 et d'accélérateur 11 sont en position de repos, et **figure 3C****,** sur laquelle la pédale d'accélérateur 11 est relâchée et la pédale de frein 12 est actionnée), le ressort de rappel 26 tend à ramener la biellette 20 en position de repos.

En outre, la biellette référencée 20 est montée sur un support référencé 24, qui est mobile en translation selon la flèche référencée 27.

Ainsi qu'illustré en **figure 3C****,** lorsque le pilote appuie sur la pédale de frein 12 (ou sur l'extension amovible 14 de cette pédale), la base de la pédale de frein 12 vient pousser le support 24 de la biellette 20, qui se déplace, selon la direction de la flèche référencée 27, vers l'arrière du kart (coulissement de l'ensemble vis/rondelle/écrou dans la lumière ménagée dans le support référencé 24). Ainsi, l'axe de rotation 25 de la biellette est également déplacé vers l'arrière du kart, ce qui entraîne un relâchement de la tension exercée sur le câble d'accélérateur 23 par l'actionnement de la pédale d'accélérateur 11 (comme illustré en **figure 3D****,** sur laquelle la pédale de frein 12 et la pédale d'accélérateur 11 sont toutes deux actionnées : le coulissement du support 24 de la biellette 20 opéré par actionnement de la pédale de frein 12 vient contrer la mise en tension du câble d'accélérateur 23 opérée par actionnement de la pédale d'accélérateur 11).

De cette façon, l'actionnement de la pédale de frein 12 contrôle et réduit l'effet de l'accélération, formant ainsi de façon simple un système « anti gaz frein ». Notamment, dans le cas d'un kart biplace, un pilote instructeur peut agir sur l'extension amovible 14 de la pédale de frein 12, et opérer un freinage d'urgence, même si l'élève-pilote garde le pied appuyé sur la pédale d'accélérateur 11.

Lorsque la pédale de frein 12 et son extension amovible 14 sont relâchés, le même ressort de rappel 26 permet de rappeler le support 24 de la biellette 20 dans sa position de repos, et donc de rappeler l'axe de rotation 25 de la biellette 20 dans sa position initiale (voir **figures 3A** **et** **3B****,** dans lesquelles la pédale de frein 12 est relâchée : le support 24 de la biellette 20 est en position de repos, dans laquelle l'ensemble vis/rondelle/écrou est en butée sur la partie arrière (par rapport au sens d'avancement du kart)de la lumière ménagée dans le support 24).

## Revendications

1. Kart biplace, comprenant une place passager et une place pilote, et équipé d'un pédalier associé à la place pilote, comprenant une pédale d'accélérateur (11) et une pédale de frein (12),
**caractérisé en ce que** ladite pédale de frein (12) présente ou peut recevoir une extension amovible (14), s'étendant sensiblement parallèlement à ladite pédale de frein vers la place passager, de façon à permettre à une personne présente à la place passager d'agir sur ladite pédale de frein,
et **en ce que** ladite extension amovible est montée mobile sur ladite pédale de frein entre une position intégrée à ladite pédale de frein et une position déployée par rapport à ladite pédale de frein.

2. Kart biplace selon la revendication 1, **caractérisé en ce que** ladite extension est montée mobile en rotation sur ladite pédale de frein, entre deux positions sensiblement à 180° l'une de l'autre, une position intégrée à ladite pédale de frein et une position déployée par rapport à ladite pédale de frein.

3. Kart biplace selon la revendication 1, **caractérisé en ce que** ladite extension est montée mobile en translation sur ladite pédale de frein, entre une position intégrée à ladite pédale de frein et une position déployée par rapport à ladite pédale de frein.

4. Kart biplace selon l'une quelconque des revendications 2 et 3, **caractérisé en ce que** ladite extension porte une portion de revêtement (16) assurant sensiblement une continuité avec la surface de ladite pédale de frein, dans ladite position intégrée.

5. Kart biplace selon l'une quelconque des revendications 1 à 4, **caractérisé en ce que** ledit pédalier est réglable, par translation par rapport au châssis (10) dudit kart.

6. Kart biplace selon l'une quelconque des revendications 1 à 5, **caractérisé en ce que** ledit pédalier comprend des moyens de modification d'une action de ladite pédale d'accélérateur, lorsque ladite pédale de frein est actionnée.

7. Kart biplace selon la revendication 6, **caractérisé en ce que** lesdits moyens de modification détendent un câble d'accélérateur (23) sur lequel agit ladite pédale d'accélérateur.

8. Kart biplace selon la revendication 7, **caractérisé en ce que** ladite pédale d'accélérateur est reliée audit câble d'accélérateur par une biellette (20) mobile autour d'un axe de rotation (25), ladite pédale de frein déplaçant ledit axe de rotation lorsqu'elle est actionnée.

9. Kart biplace selon la revendication 8, **caractérisé en ce que** ledit pédalier met en oeuvre un unique ressort de rappel (26) agissant sur ladite biellette, assurant le rappel en position de repos de la pédale d'accélérateur et de la pédale de frein.

10. Pédale de frein (12) pour kart biplace, comprenant une place passager et une place pilote, et équipé d'un pédalier associé à la place pilote, comprenant une pédale d'accélérateur et une pédale de frein,
**caractérisé en ce que** ladite pédale de frein présente ou peut recevoir une extension amovible (14), s'étendant sensiblement parallèlement à ladite pédale de frein vers la place passager, de façon à permettre à une personne présente à la place passager d'agir sur ladite pédale de frein, et **en ce que** ladite extension amovible est montée mobile sur ladite pédale de frein entre une position intégrée à ladite pédale de frein et une position déployée par rapport à ladite pédale de frein.

## Patentansprüche

1. Zweisitzer-Gokart, welches einen Fahrerplatz und einen Beifahrerplatz umfasst und mit einem dem Fahrerplatz zugeordneten Pedalwerk ausgestattet ist, welches ein Gaspedal (11) und ein Bremspedal (12) umfasst,
**dadurch gekennzeichnet, dass** das Bremspedal (12) eine lösbare Verlängerung (14) aufweist oder aufnehmen kann, die sich im Wesentlichen parallel zu dem Bremspedal zu dem Beifahrerplatz hin erstreckt, um einer auf dem Beifahrerplatz anwesenden Person zu ermöglichen, auf das Bremspedal einzuwirken,
und dadurch, dass die lösbare Verlängerung an dem Bremspedal beweglich zwischen einer in das Bremspedal integrierten Position und einer bezüglich des Bremspedals ausgefahrenen Position angebracht ist.

2. Zweisitzer-Gokart nach Anspruch 1, **dadurch gekennzeichnet, dass** die Verlängerung an dem Bremspedal drehbeweglich zwischen zwei im Wesentlichen um 180° zueinander versetzten Positionen angebracht ist, einer in das Bremspedal integrierten Position und einer bezüglich des Bremspedals ausgefahrenen Position.

3. Zweisitzer-Gokart nach Anspruch 1, **dadurch gekennzeichnet, dass** die Verlängerung an dem Bremspedal translationsbeweglich zwischen einer in das Bremspedal integrierten Position und einer bezüglich des Bremspedals ausgefahrenen Position angebracht ist.

4. Zweisitzer-Gokart nach einem der Ansprüche 2 und 3, **dadurch gekennzeichnet, dass** die Verlängerung einen Beschichtungsabschnitt (16) trägt, der im Wesentlichen eine Kontinuität mit der Oberfläche des Bremspedals in der integrierten Position sicherstellt.

5. Zweisitzer-Gokart nach einem der Ansprüche 1 bis 4, **dadurch gekennzeichnet, dass** das Pedalwerk durch Translation bezüglich des Rahmens (10) des Gokarts verstellbar ist.

6. Zweisitzer-Gokart nach einem der Ansprüche 1 bis 5, **dadurch gekennzeichnet, dass** das Pedalwerk Mittel zur Modifikation einer Aktion des Gaspedals, wenn das Bremspedal betätigt wird, umfasst.

7. Zweisitzer-Gokart nach Anspruch 6, **dadurch gekennzeichnet, dass** die Mittel zur Modifikation ein Gaskabel (23) entspannen, auf welches das Gaspedal einwirkt.

8. Zweisitzer-Gokart nach Anspruch 7, **dadurch gekennzeichnet, dass** das Gaspedal mit dem Gaskabel durch einen Schwenkarm (20) verbunden ist, der um eine Drehachse (25) beweglich ist, wobei das Bremspedal diese Drehachse verlagert, wenn es betätigt wird.

9. Zweisitzer-Gokart nach Anspruch 8, **dadurch gekennzeichnet, dass** das Pedalwerk eine einzige, auf den Schwenkarm einwirkende Rückholfeder (26) einsetzt, welche die Rückholung des Gaspedals und des Bremspedals in die Ruheposition sicherstellt.

10. Bremspedal (12) für ein Zweisitzer-Gokart, welches einen Fahrerplatz und einen Beifahrerplatz umfasst und mit einem dem Fahrerplatz zugeordneten Pedalwerk ausgestattet ist, welches ein Gaspedal und ein Bremspedal umfasst,
**dadurch gekennzeichnet, dass** das Bremspedal eine lösbare Verlängerung (14) aufweist oder aufnehmen kann, die sich im Wesentlichen parallel zu dem Bremspedal zu dem Beifahrerplatz hin erstreckt, um einer auf dem Beifahrerplatz anwesenden Person zu ermöglichen, auf das Bremspedal einzuwirken, und dadurch, dass die lösbare Verlängerung an dem Bremspedal beweglich zwischen einer in das Bremspedal integrierten Position und einer bezüglich des Bremspedals ausgefahrenen Position angebracht ist.

## Claims

1. Two-seater go-kart comprising a passenger seat and a driver's seat and equipped with a pedal system associated with the driver's seat, comprising an accelerator pedal (11) and a brake pedal (12), **characterised in that** said brake pedal (12) has or can accommodate a removable extension (14), running substantially parallel to said brake pedal, towards the passenger seat, so that a person present in the passenger seat can act on said brake pedal and **in that** said removable extension is mounted movably on said brake pedal between a position integrated with said brake pedal and a position deployed relative to said brake pedal.

2. Two-seater go-kart according to Claim 1, **characterised in that** said extension is mounted movably and rotatably on said brake pedal between two positions substantially 180° from each other: a position integrated with said brake pedal and a position deployed relative to said brake pedal.

3. Two-seater go-kart according to Claim 1, **characterised in that** said extension is mounted movably, for translational motion, on said brake pedal between a position integrated with said brake pedal and a position deployed relative to said brake pedal.

4. Two-seater go-kart according to either of Claims 2 or 3, **characterised in that** said extension bears a portion of covering (16) substantially providing continuity with the surface of said brake pedal, in said integrated position.

5. Two-seater go-kart according to any one of Claims 1 to 4, **characterised in that** said pedal system is adjustable, by translational motion relative to said go-kart's chassis (10).

6. Two-seater go-kart according to any one of Claims 1 to 5, **characterised in that** said pedal system comprises means of modifying an action of said accelerator pedal when said brake pedal is operated.

7. Two-seater go-kart according to Claim 6, **characterised in that** said means of modification slacken an accelerator cable (23) on which said accelerator pedal acts.

8. Two-seater go-kart according to Claim 7, **characterised in that** said accelerator pedal is connected to said accelerator cable by a rocker bar (20) which is movable about a rotation axis (25), said brake pedal displacing said rotation axis when it is operated.

9. Two-seater go-kart according to Claim 8, **characterised in that** said pedal system uses a single return spring (26) acting on said rocker bar, returning the accelerator pedal and brake pedal to the idle positions.

10. Brake pedal (12) for a two-seater go-kart comprising a passenger seat and a driver's seat and equipped with a pedal system associated with the driver's seat, comprising an accelerator pedal and a brake pedal, **characterised in that** said brake pedal has or can accommodate a removable extension (14), running substantially parallel to said brake pedal, towards the passenger seat, so that a person present in the passenger seat can act on said brake pedal and **in that** said removable extension is mounted movably on said brake pedal between a position integrated with said brake pedal and a position deployed relative to said brake pedal.
